# FASCICULE DE BREVET EUROPEEN

(11) **EP 3 438 765 B1**
(45) Date de publication et mention de la délivrance du brevet: **05.02.2020**
(21) Numéro de dépôt: 17184983.9
(22) Date de dépôt: 04.08.2017
(51) Int. Cl.: G04C 3/14, G01D 5/241

(54) **MOUVEMENT HORLOGER COMPORTANT UN DISPOSITIF DE DÉTECTION D'UNE POSITION ANGULAIRE D'UNE ROUE**
UHRWERK, DAS EINE VORRICHTUNG ZUR ERFASSUNG DER WINKELPOSITION EINES RADS UMFASST
HOROLOGICAL MOVEMENT COMPRISING A DEVICE FOR DETECTING AN ANGULAR POSITION OF A WHEEL

(43) Date de publication de la demande: 06.02.2019
(73) Titulaire: ETA SA Manufacture Horlogère Suisse, 2540 Grenchen (CH)
(72) Inventeur: RUFENER, René, 2504 Bienne (CH)
(74) Mandataire: ICB SA

(56) Documents cités:
- EP-A1- 3 007 013
- EP-A1- 3 037 899
- EP-A2- 1 058 095
- GB-A- 2 320 578
- JP-A- 2004 163 128
- JP-A- 2004 233 132
- US-A1- 2012 229 150

## Description

### Domaine technique

L'invention se rapporte au domaine des mouvements horlogers pourvus d'un affichage analogique et d'au moins une roue solidaire en rotation d'un indicateur rotatif de cet affichage analogique. L'invention se rapporte plus particulièrement aux dispositifs de détection de la position angulaire d'une telle roue, dans le but de déterminer la position angulaire de l'indicateur rotatif.

### Art antérieur

On connait des dispositifs de détection d'au moins une position angulaire d'une roue appartenant à un mouvement de montre. En particulier, on connait de la demande EP 3 037 899 A1 un dispositif de détection, dont une partie est schématiquement illustrée à la figure 1. Le dispositif comprend une plaque PA de circuit imprimé, fixe par rapport à la platine du mouvement, et agencée parallèlement à la roue MB. La plaque PA comprend trois électrodes planes, appelées première électrode E1, deuxième électrode E2 et électrode commune Em. Les électrodes ont la forme de secteurs d'un même anneau, l'électrode commune Em étant placée entre la première électrode E1 et la deuxième électrode E2. La roue MB, quant à elle, comporte un plateau PT électriquement conducteur percé d'une ouverture OV. L'ouverture OV est agencée de sorte à pouvoir successivement se trouver, lorsque la roue MB effectue une rotation, en vis-à-vis de la première électrode E1 seulement, puis de la première électrode E1 et de l'électrode commune Em, puis des trois électrodes, puis de l'électrode commune Em et de la deuxième électrode E2, et enfin de la deuxième électrode E2 seulement.

Le dispositif de détection comporte en outre un circuit électronique permettant d'imposer des potentiels à la première électrode E1, la deuxième électrode E2 et l'électrode commune Em. Selon ce circuit, des tensions en créneaux sont appliquées à la première électrode E1 et à la deuxième électrode E2 de sorte à charger alternativement la première électrode E1 et la deuxième électrode E2 : la première électrode E1 est maintenue à un potentiel haut tandis que la deuxième électrode est maintenue à un potentiel bas, puis inversement. L'électrode commune Em est quant à elle maintenue à un potentiel intermédiaire qui est avantageusement la moyenne du potentiel haut et du potentiel bas.

Etant donné que la première électrode E1 et l'électrode commune Em comportent des bords latéraux proches et en regard l'un de l'autre, qu'elles sont à des potentiels différents et que le potentiel de la première électrode E1 est variable, un couplage capacitif s'effectue entre ces deux électrodes : on nomme première capacité C1, la capacité entre ces deux électrodes. De même, étant donné que la deuxième électrode E2 et l'électrode commune Em comportent des bords latéraux proches et en regard l'un de l'autre, qu'elles sont à des potentiels différents et que le potentiel de la deuxième électrode est variable, un couplage capacitif s'effectue entre ces deux électrodes : on nomme deuxième capacité C2, la capacité entre ces deux électrodes.

Ces capacités C1, C2 voient leurs valeurs varier en fonction de la position de l'ouverture OV de la roue : lorsque l'ouverture OV est simultanément au-dessus de la première électrode E1 et l'électrode commune Em, la première capacité C1 est maximale puisque la roue ne coupe aucune ligne de champ électrique entre la première électrode E1 et l'électrode commune Em. De même, lorsque l'ouverture est simultanément au-dessus de la deuxième électrode E2 et l'électrode commune Em, la deuxième capacité C2 est maximale puisque la roue ne coupe aucune ligne de champ électrique entre la deuxième électrode E2 et l'électrode commune Em.

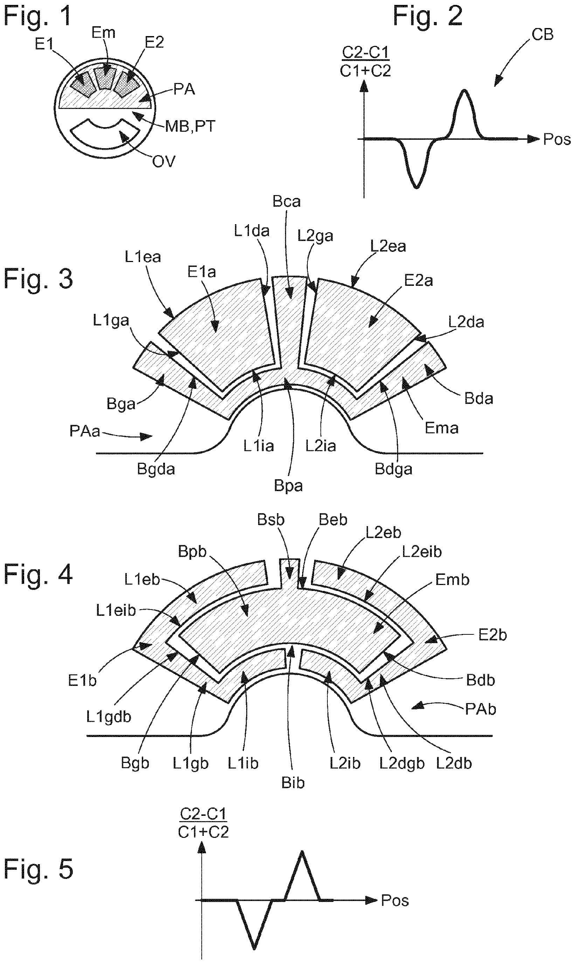

Le circuit électronique comporte en outre un montage électronique connecté à l'électrode commune Em. Le montage électronique permet de mesurer (C2-C1)/(C1+C2) en fonction de la position de l'ouverture, lorsque que la roue MB effectue une rotation. Une courbe obtenue à partir de ces mesures par interpolation linéaire, est illustrée à la figure 2. Comme cela a été expliqué précédemment, cette courbe atteint un minimum lorsque la première électrode E1 et l'électrode commune Em uniquement sont intégralement en vis-à-vis de l'ouverture OV, et un maximum lorsque l'électrode commune Em et la deuxième électrode E2 seulement sont intégralement en vis-à-vis de l'ouverture OV.

### Résumé de l'invention

La présente invention vise à faciliter la détection du maximum et du minimum de la courbe obtenue par interpolation linéaire des mesures de (C2-C1)/(C1+C2) en fonction de la position angulaire de la roue, de sorte à rendre la détermination de la position angulaire de la roue plus précise.

A cet effet, l'invention a pour objet un mouvement horloger selon la revendication 1.

L'électrode commune comporte donc non seulement des bords s'étendant en regard d'un bord latéral de la première électrode et d'un bord latéral de la deuxième électrode, comme c'est déjà le cas dans l'art antérieur, mais également des bords s'étendant en regard d'un bord circonférentiel de la première électrode et d'un bord circonférentiel de la deuxième électrode. Le couplage entre l'électrode commune et la première électrode d'une part, et entre l'électrode commune et la deuxième électrode d'autre part, est donc amélioré par rapport à l'art antérieur, puisque la longueur totale de l'électrode commune en regard de la première électrode et en regard de la deuxième électrode, est plus importante. Le couplage est à la fois radial et latéral. Le couplage étant plus important, la courbe présente un maximum et un minimum plus prononcés. Plus précisément, la courbe est de forme quasi-triangulaire.

Dans un premier mode de réalisation, le mouvement horloger comprend les caractéristiques définies dans la revendication 2. Dans un premier mode de réalisation alternatif, le mouvement horloger comprend les caractéristiques définies dans la revendication 3.

Dans les deux modes de réalisation précités, la forme de l'électrode commune a été modifiée par rapport à l'art antérieur, pour qu'elle encadre la première électrode et la deuxième électrode sur au moins deux de leurs côtés.

Avantageusement, le mouvement horloger comprend les caractéristiques définies dans la revendication 4.

Ainsi, l'électrode commune encadre la première électrode et la deuxième électrode sur au moins trois de leurs côtés.

Avantageusement, le mouvement horloger comprend les caractéristiques définies dans la revendication 5 et/ou dans la revendication 6.

Dans un deuxième mode de réalisation, le mouvement horloger comprend les caractéristiques définies dans la revendication 7.

Dans le deuxième mode de réalisation, l'électrode commune est globalement en forme de secteur d'anneau, comme dans l'art antérieur, mais la forme de la première électrode et de la deuxième électrode a été modifiée pour que chacune encadre l'électrode commune sur au moins deux de ses côtés.

Avantageusement, le mouvement horloger comprend les caractéristiques définies dans la revendication 8.

### Brève description des figures

D'autres caractéristiques et avantage de la présente invention apparaîtrons à la lecture de plusieurs formes d'exécutions données uniquement à titre d'exemples non limitatifs et faites en référence aux dessins annexés dans lesquels :
- La figure 1, déjà décrite, représente une roue et une partie d'un dispositif de détection de la position angulaire de la roue selon l'art antérieur, le dispositif de détection comportant une plaque sur laquelle une première électrode, une deuxième électrode et une électrode commune sont disposées
- La figure 2, déjà décrite, représente une courbe montrant (C2-C1)/(C1+C2) en fonction de l'angle de rotation de la roue, où C1 est la capacité entre la première électrode et l'électrode commune, et C2 est la capacité entre la deuxième électrode et l'électrode commune
- La figure 3 représente la première électrode, la deuxième électrode et une électrode commune selon un premier mode de réalisation de l'invention, disposées sur une plaque d'un dispositif de détection de la position angulaire d'une roue
- La figure 4 représente la première électrode, la deuxième électrode et une électrode commune selon un deuxième mode de réalisation de l'invention, disposées sur une plaque d'un dispositif de détection de la position angulaire d'une roue.

### Description détaillée des formes d'exécution

Les figures 3 et 4 illustrent respectivement une plaque PAa selon un premier mode de réalisation de l'invention et une plaque PAb selon un deuxième mode de réalisation de l'invention, pour remplacer la plaque PA déjà décrite en référence à l'art antérieur. Chacune des deux plaques PA1, PA2 comporte une première électrode E1a, E1b, une deuxième électrode E2a, E2b et une électrode commune Ema, Emb, toutes trois planes.

Dans le premier mode de réalisation, illustré à la figure 3, la première électrode E1a et la deuxième électrode E2a de la plaque PAa sont de forme semblables à la première électrode E1 et à la deuxième électrode E2 de la plaque PA : elles ont la forme de secteurs d'un même anneau ayant pour centre l'intersection entre la plaque PAa et l'axe de la roue MB. La première électrode E1a, respectivement la deuxième électrode E2a, comporte donc deux bords latéraux L1ga, L1da, respectivement L2ga, L2da, s'étendant radialement par rapport à un cercle dont le centre serait l'intersection entre la plaque PAa et l'axe de la roue MB. La première électrode E1a, respectivement la deuxième électrode E2a, comporte également un bord interne L1ia et un bord externe L1ea, respectivement un bord interne L2ia et un bord externe L2ea, s'étendant chacun en arc de cercle, et reliant les bords latéraux L1gx, L1dx, respectivement L2gx, L2dx. Les bords internes L1ia et L2ia s'étendent en arc d'un même cercle, tandis que les bords externes L1ea et L2ea s'étendent en arc d'un autre même cercle.

L'électrode commune Ema est constituée d'une première branche Bga, d'une deuxième branche Bda, d'une branche médiane Bca et d'une portion centrale Bpa reliant la première branche Bga, la deuxième branche Bda et la branche médiane Bca. La première branche Bga, la deuxième branche Bda et la branche médiane Bca s'étendent radialement, par rapport à un cercle dont le centre serait l'intersection entre la plaque PAa et l'axe de la roue MB. La première branche Bga, la deuxième branche Bda et la branche médiane Bca sont de longueurs sensiblement égales. La première branche Bga s'étend en regard de la première électrode E1a uniquement. Plus précisément, un premier bord Bgda de l'électrode commune Ema, ledit premier bord Bgda appartenant à la première branche Bga, est en regard du bord latéral L1ga de la première électrode E1a. La deuxième branche Bda s'étend en regard de la deuxième électrode E2a uniquement. Plus précisément, un deuxième bord Bdga de l'électrode commune Ema, ledit deuxième bord Bdga appartenant à la deuxième branche Bda, est en regard du bord latéral L2da de la deuxième électrode E2a. La branche médiane Bca s'étend entre la première électrode E1a et la deuxième électrode E2a, en particulier en regard du bord latéral L1da de la première électrode E1a et du bord latéral L2ga de la deuxième électrode E2a. La portion centrale Bpa s'étend en arc de cercle entre la première branche Bga et la deuxième branche Bda, en passant par la branche médiane Bca.

On note que la portion centrale Bpa relie les extrémités de la première branche Bga, de la deuxième branche Bda et de la branche médiane Bca se trouvant le plus près de l'intersection entre la plaque Pa1 et l'axe de la roue MB. La portion centrale Bpa se trouve donc en partie en regard des bords internes L1ia et L2ia. Toutefois, dans un mode de réalisation alternatif non représenté, la portion centrale Bpa relie les extrémités de la première branche Bga, de la deuxième branche Bda et de la branche médiane Bca se trouvant le plus loin de l'intersection entre la plaque Pa1 et l'axe de la roue MB. La portion centrale Bpa se trouve alors en partie en regard des bords externes L1ea et L2ea.

La position de la portion centrale a un impact sur le couplage entre l'électrode commune et l'arbre de la roue d'une part, et d'autre part sur le couplage entre l'électrode commune et un autre élément métallique du mouvement (par exemple une roue ou un arbre) qui se trouverait à proximité des extrémités des branches se trouvant le plus loin de l'intersection entre la plaque et l'axe de la roue MB. De tels couplages sont perturbateurs des mesures. Dans le mode de réalisation représenté à la figure 3, le couplage entre l'électrode commune et l'autre élément métallique est minimisé. Dans le mode de réalisation alternatif non représenté, le couplage entre l'électrode commune et l'arbre de la roue est minimisé.

Dans le deuxième mode de réalisation, illustré à la figure 4, l'électrode commune Emb une portion centrale Bpb qui a la forme d'un secteur d'anneau ayant pour centre l'intersection entre la plaque PAb et l'axe de la roue MB. L'électrode commune Emb comporte donc deux bords latéraux Bgb, Bdb, s'étendant radialement par rapport à un cercle dont le centre serait l'intersection entre la plaque PAb et l'axe de la roue MB. L'électrode commune Emb comporte également un bord interne Bib et un bord externe Beb, s'étendant chacun en arc de cercle, et reliant les bords latéraux Bgb, Bdb. Dans le mode de réalisation représenté, le bord externe Beb comporte une discontinuité : l'électrode commune Emb comporte ainsi une portion saillante Bsb faisant saillie radialement de la portion centrale Bpb, depuis le centre du bord externe Beb. La partie saillante Bsb est utilisée à des fins connectiques.

La première électrode E1b et la deuxième électrode E2b sont disposées symétriquement de part et d'autre de l'électrode commune Emb, et à elles deux encadrent l'électrode commune Emb. La première électrode E1b comporte une branche radiale L1gb s'étendant radialement en regard de l'électrode commune Emb. Plus précisément, un bord latéral L1gdb de la branche radiale L1gb est en regard du premier bord latéral Bgb de l'électrode commune Emb. La première électrode E1b comporte également deux branches circonférentielles L1ib, L1eb, qui s'étendent de part et d'autre de l'électrode commune Emb, en forme d'arc d'un cercle donc le centre serait l'intersection entre la plaque PAb et l'axe de la roue MB. L'une des branches circonférentielles, L1ib, est située du côté de l'axe de la roue MB. L'autre branche circonférentielle, L1eb, est située de l'autre côté. On note que la branche circonférentielle L1eb comporte un bord circonférentiel L1eib positionné en regard du bord externe Beb de l'électrode commune Emb. De même, la deuxième électrode E2b comporte une branche radiale L2db s'étendant radialement en regard de l'électrode commune Emb. Plus précisément, un bord latéral L2dgb de la branche radiale L2db est en regard du deuxième bord latéral Bdb de l'électrode commune Emb. La deuxième électrode E2b comporte également deux branches circonférentielles L2ib, L2eb, qui s'étendent de part et d'autre de l'électrode commune Emb, en forme d'arc d'un cercle donc le centre serait l'intersection entre la plaque PAb et l'axe de la roue MB. L'une des branches circonférentielles, L2ib, est située du côté de l'axe de la roue MB. L'autre branche circonférentielle, L2eb, est située de l'autre côté. On note que la branche circonférentielle L2eb comporte un bord circonférentiel L2eib positionné en regard du bord externe Beb de l'électrode commune Emb.

Dans les modes de réalisation décrits, on remarque que le couplage entre l'électrode commune et la première électrode d'une part, et entre l'électrode commune et la deuxième électrode d'autre part, est à la fois radial et latéral. La courbe d'interpolation linéaire représentant (C2-C1)/(C1+C2) en fonction de la position angulaire de la roue MB est d'une forme approchant celle montrée à la figure 5, c'est-à-dire une forme sensiblement triangulaire.

On comprendra que diverses modifications et/ou améliorations et/ou combinaisons évidentes pour l'homme du métier peuvent être apportées aux différentes formes d'exécution de l'invention exposée ci-dessus sans sortir du cadre de l'invention définie par les revendications annexées. Par exemple, dans le premier mode de réalisation, l'électrode commune Ema pourrait ne pas comprendre de branche médiane Bca. Dans le deuxième mode de réalisation, la première électrode E1b et la deuxième électrode E2b pourrai(en)t ne comprendre qu'une seule branche circonférentielle et/ou l'électrode commune pourrait ne pas comprendre de portion saillante Bsb.

Par ailleurs, on note que l'ouverture OV dans le plateau PT de la roue MB pourrait être remplacée par un élément de même géométrie que l'ouverture, fait d'un matériau ayant une permittivité diélectrique différente de celle du reste du plateau PT et différente de celle de l'air. Cela ne change rien au principe de l'invention. Pour généraliser, on appelle donc « élément de localisation » l'ouverture ou un tel élément.

## Revendications

1. Mouvement horloger comprenant :
- un affichage analogique, comportant un indicateur rotatif et une roue (MB) solidaire en rotation dudit indicateur rotatif, ladite roue (MB) comportant un plateau (PT) comprenant un élément de localisation (OV),
- un dispositif de détection d'au moins une position angulaire de l'élément de localisation (OV), comprenant une plaque (PAa, PAb) fixe par rapport au plateau (PT), s'étendant sensiblement parallèlement au plateau (PT), et sur laquelle sont agencées :
∘ une première électrode (E1a, E1b) et une deuxième électrode (E2a, E2b), ayant chacune un bord radial (L1ga, L1gdb, L2da, L2dgb) et un bord circonférentiel (L1ia, L1eib, L2ia, L2eib), les termes radial et circonférentiel s'entendant par rapport à un cercle qui serait centré sur l'intersection entre l'axe de la roue (MB) et la plaque (PAa, PAb), et
∘ une électrode commune (Ema, Emb), comportant
• un premier bord (Bgda, Bgb) s'étendant radialement en regard d'un dit bord radial (L1ga, L1gdb) de la première électrode (E1a, E1b),
• un deuxième bord (Bdga, Bdb) s'étendant radialement en regard d'un dit bord radial (L2da, L2dgb) de la deuxième électrode (E2a, E2b), et
• une portion centrale (Bpa, Bpb) par laquelle au moins un point du premier bord (Bgda, Bgb) et au moins un point du deuxième bord (Bdga, Bdb) sont reliés, les électrodes étant planes et étant agencées de sorte que, dans une position angulaire de la roue (MB), l'élément de localisation (OV) se trouve au-dessus d'au moins une portion de chaque électrode,
**caractérisé en ce que** ladite portion centrale (Bpa, Bpb) s'étend en partie en regard d'un dit bord circonférentiel (L1ia, L1eib) de la première électrode (E1a, E1b) et en partie en regard d'un dit bord circonférentiel (L2ia, L2eib) de la deuxième électrode (E2a, E2b).

2. Mouvement horloger selon la revendication précédente, **caractérisé en ce que** l'électrode commune (Ema) comporte une première branche (Bga) à laquelle le premier bord (Bgda) appartient, une deuxième branche (Bda) à laquelle le deuxième bord (Bdga) appartient, la portion centrale (Bpa) reliant les extrémités de la première branche (Bga) et de la deuxième branche (Bda) les plus proches de l'axe de la roue (MB), dites extrémités inférieures.

3. Mouvement horloger selon la revendication 1, **caractérisé en ce que** l'électrode commune (Ema) comporte une première branche (Bga) à laquelle le premier bord (Bgda) appartient, une deuxième branche (Bda) à laquelle le deuxième bord (Bdga) appartient, la portion centrale reliant les extrémités de la première branche (Bga) et de la deuxième branche (Bda) les plus éloignées de l'axe de la roue (MB), dites extrémités supérieures.

4. Mouvement horloger selon l'une des revendications 2 ou 3, **caractérisé en ce que** l'électrode commune (Ema) comporte une branche médiane (Bca) s'étendant radialement entre la première électrode (E1a) et la deuxième électrode (E1b), ladite branche médiane (Bca) étant reliée à la portion centrale (Bpa).

5. Mouvement horloger selon l'une des revendications 2 à 4, **caractérisé en ce que** la portion centrale (Bpa) s'étend en forme d'arc d'un cercle centré sur l'intersection entre l'axe de la roue (MB) et la plaque (PAa).

6. Mouvement horloger selon l'une des revendications 2 à 5, **caractérisé en ce que** la première électrode (E1a) et la deuxième électrode (E2a) ont la forme de deux secteurs d'un anneau centré sur l'intersection entre l'axe de la roue (MB) et la plaque (PAa).

7. Mouvement horloger selon la revendication 1, **caractérisé en ce que** la portion centrale (Bpb) de l'électrode commune (Emb) a la forme d'un secteur d'un anneau centré sur l'intersection entre l'axe de la roue (MB) et la plaque (PAb), et **en ce que** la première électrode (E1b) et la deuxième électrode (E2b) encadrent l'électrode commune (Emb).

8. Mouvement horloger selon la revendication précédente, **caractérisé en ce que** la première électrode (E1b) comporte une branche (L1gb) radiale à laquelle le bord latéral (L1gdb) de la première électrode (E1b) appartient, la deuxième électrode (E2b) comporte une deuxième branche (L2db) radiale à laquelle le bord latéral (L2dgb) de la deuxième électrode (E2b) appartient, et chacune de la première électrode (E1b) et de la deuxième électrode (E2b) comporte deux branches circonférentielles (L1eb, L2eb) disposées de part et d'autre de l'électrode commune (Emb) et reliées à la branche radiale (L1gb, L2db), à laquelle le bord circonférentiel (L1eib, L2eib) appartient.

9. Mouvement horloger selon l'une des revendications précédentes, **caractérisé en ce que** l'élément de localisation (OV) est une ouverture traversant le plateau (PT) de la roue (MB).

10. Mouvement horloger selon l'une des revendications 1 à 8, **caractérisé en ce que** l'élément de localisation (OV) est fait d'un matériau dont la permittivité diélectrique est différente de celle du reste du plateau (PT) et de l'air.

## Patentansprüche

1. Uhrwerk umfassend:
- eine Analoganzeige, die einen Drehanzeiger und ein Rad (MB), das mit dem Drehanzeiger drehfest verbunden ist, umfasst, wobei das Rad (MB) eine Scheibe (PT) mit einem Lokalisierungselement (OV) aufweist,
- eine Vorrichtung zum Erfassen mindestens einer Winkelposition des Lokalisierungselements (OV) mit einer in Bezug auf die Scheibe (PT) festen Platte (PAa, PAb), die sich im Wesentlichen parallel zur Scheibe (PT) erstreckt, und auf der angeordnet sind:
o eine erste Elektrode (E1 a, E1 b) und eine zweite Elektrode (E2a, E2b), die jeweils eine radiale Kante (L1ga, L1gdb, L2da, L2dgb) und eine Umfangskante (L1ia, L1eib, L2ia, L2eib) aufweisen, wobei die Begriffe radial und Umfang in Bezug auf einen Kreis zu verstehen sind, der auf den Schnittpunkt zwischen Radachse (MB) und Platte (PAa, PAb) zentriert ist, und
o eine gemeinsame Elektrode (Ema, Emb), umfassend
• eine erste Kante (Bgda, Bgb), die sich radial in Bezug auf eine radiale Kante (L1ga, L1gdb) der ersten Elektrode (E1a, E1b) erstreckt,
• eine zweite Kante (Bdga, Bdb), die sich radial in Bezug auf eine radiale Kante (L2da, L2dgb) der zweiten Elektrode (E2a, E2b) erstreckt, und
• einen Mittelabschnitt (Bpa, Bpb), durch den mindestens ein Punkt der ersten Kante (Bgda, Bgb) und mindestens ein Punkt der zweiten Kante (Bdga, Bdb) verbunden sind,
wobei die Elektroden flach und so angeordnet sind, dass sich in einer Winkelposition des Rades (MB) das Lokalisierungselement (OV) über mindestens einem Abschnitt jeder Elektrode befindet,
**dadurch gekennzeichnet, dass** der Mittelabschnitt (Bpa, Bpb) sich teilweise gegenüber der Umfangskante (L1ia, L1eib) der ersten Elektrode (E1a, E1b) und teilweise gegenüber der Umfangskante (L2ia, L2eib) der zweiten Elektrode (E2a, E2b) erstreckt.

2. Uhrwerk nach dem vorhergehenden Anspruch, **dadurch gekennzeichnet, dass** die gemeinsame Elektrode (Ema) einen ersten Zweig (Bga), zu dem die erste Kante (Bgda) gehört, und einen zweiten Zweig (Bda), zu dem die zweite Kante (Bdga) gehört, umfasst, wobei der Mittelabschnitt (Bpa) die Enden des ersten Zweiges (Bga) und des zweiten Zweiges (Bda), die der Achse des Rades (MB) am nächsten liegen, mit den unteren Enden verbindet.

3. Uhrwerk nach Anspruch 1, **dadurch gekennzeichnet, dass** die gemeinsame Elektrode (Ema) einen ersten Zweig (Bga), zu dem die erste Kante (Bgda) gehört, und einen zweiten Zweig (Bda), zu dem die zweite Kante (Bdga) gehört, umfasst, wobei der Mittelabschnitt die Enden des ersten Zweiges (Bga) und des zweiten Zweiges (Bda), die von der Achse des Rades (MB) am weitesten entfernt liegen, mit den unteren Enden verbindet.

4. Uhrwerk nach einem der Ansprüche 2 oder 3, **dadurch gekennzeichnet, dass** die gemeinsame Elektrode (Ema) einen mittleren Zweig (Bca) umfasst, der sich radial zwischen der ersten Elektrode (E1a) und der zweiten Elektrode (E1b) erstreckt, wobei der mittlere Zweig (Bca) mit dem Mittelabschnitt (Bpa) verbunden ist.

5. Uhrwerk nach einem der Ansprüche 2 bis 4, **dadurch gekennzeichnet, dass** sich der Mittelabschnitt (Bpa) in Form eines Kreisbogens erstreckt, der auf den Schnittpunkt zwischen der Achse des Rades (MB) und der Platte (PAa) zentriert ist.

6. Uhrwerk nach einem der Ansprüche 2 bis 5, **dadurch gekennzeichnet, dass** die erste Elektrode (E1a) und die zweite Elektrode (E2a) die Form zweier Sektoren eines Ringes aufweisen, der auf den Schnittpunkt zwischen der Achse des Rades (MB) und der Platte (PAa) zentriert ist.

7. Uhrwerk nach Anspruch 1, **dadurch gekennzeichnet, dass** der Mittelabschnitt (Bpb) der gemeinsamen Elektrode (Emb) die Form eines Sektors eines Rings aufweist, der auf den Schnittpunkt zwischen der Achse des Rades (MB) und der Platte (PAb) zentriert ist, und dass die erste Elektrode (E1b) und die zweite Elektrode (E2b) die gemeinsame Elektrode (Emb) umrahmen.

8. Uhrwerk nach dem vorhergehenden Anspruch, **dadurch gekennzeichnet, dass** die erste Elektrode (E1b) einen radialen Zweig (L1gb) aufweist, zu dem die Seitenkante (L1gdb) der ersten Elektrode (E1b) gehört, die zweite Elektrode (E2b) einen zweiten radialen Zweig (L2db) aufweist, zu dem die Seitenkante (L2dgb) der zweiten Elektrode (E2b) gehört, und die erste Elektrode (E1b) und die zweite Elektrode (E2b) jeweils zwei Umfangsverzweigungen (L1eb, L2eb) aufweisen, die auf beiden Seiten der gemeinsamen Elektrode (Emb) angeordnet und mit dem radialen Zweig (L1gb, L2db) verbunden sind, zu dem die Umfangskante (L1eib, L2eib) gehört.

9. Uhrwerk nach einem der vorhergehenden Ansprüche, **dadurch gekennzeichnet, dass** das Lokalisierungselement (OV) eine Öffnung ist, die durch die Scheibe (PT) des Rades (MB) verläuft.

10. Uhrwerk nach einem der Ansprüche 1 bis 8, **dadurch gekennzeichnet, dass** das Lokalisierungselement (OV) aus einem Material hergestellt ist, dessen dielektrische Leitfähigkeit sich von der der übrigen Scheibe (PT) und der Luft unterscheidet.

## Claims

1. Timepiece movement comprising:
- an analogue display, including a rotary indicator and a wheel (MB) that rotates as one with said rotary indicator, said wheel (MB) including a plate (PT) comprising a locating element (OV);
- a device for detecting at least one angular position of the locating element (OV), comprising a board (PAa, PAb) that is fixed with respect to the plate (PT), extending substantially parallel to the plate (PT), and on which the following are arranged:
∘ a first electrode (E1a, E1b) and a second electrode (E2a, E2b), each having a radial edge (L1ga, L1gdb, L2da, L2dgb) and a circumferential edge (L1ia, L1eib, L2ia, L2eib), the terms radial and circumferential being understood with respect to a circle that would be centred on the intersection between the axle of the wheel (MB) and the board (PAa, PAb); and
∘ a common electrode (Ema, Emb), including:
• a first edge (Bgda, Bgb) extending radially facing a said radial edge (L1ga, L1gdb) of the first electrode (E1a, E1b);
• a second edge (Bdga, Bdb) extending radially facing a said radial edge (L2da, L2dgb) of the second electrode (E2a, E2b); and
• a central portion (Bpa, Bpb) via which at least one point of the first edge (Bgda, Bgb) and at least one point of the second edge (Bdga, Bdb) are linked,
the electrodes being planar and being arranged such that, in one angular position of the wheel (MB), the locating element (OV) is located over at least a portion of each electrode,
**characterized in that** the said central portion (Bpa, Bpb) extends partly facing a said circumferential edge (L1ia, L1eib) of the first electrode (E1a, E1b) and partly facing a said circumferential edge (L2ia, L2eib) of the second electrode (E2a, E2b).

2. Timepiece movement according to the preceding claim, **characterized in that** the common electrode (Ema) includes a first branch (Bga) to which the first edge (Bgda) belongs, a second branch (Bda) to which the second edge (Bdga) belongs, the central portion (Bpa) linking the ends of the first branch (Bga) and of the second branch (Bda) that are closest to the axle of the wheel (MB), referred to as lower ends.

3. Timepiece movement according to Claim 1, **characterized in that** the common electrode (Ema) includes a first branch (Bga) to which the first edge (Bgda) belongs, a second branch (Bda) to which the second edge (Bdga) belongs, the central portion linking the ends of the first branch (Bga) and of the second branch (Bda) that are furthest from the axle of the wheel (MB), referred to as upper ends.

4. Timepiece movement according to either of Claims 2 and 3, **characterized in that** the common electrode (Ema) includes a median branch (Bca) extending radially between the first electrode (E1a) and the second electrode (E1b), said median branch (Bca) being linked to the central portion (Bpa).

5. Timepiece movement according to one of Claims 2 to 4, **characterized in that** the central portion (Bpa) extends in the shape of an arc of a circle centred on the intersection between the axle of the wheel (MB) and the board (PAa).

6. Timepiece movement according to one of Claims 2 to 5, **characterized in that** the first electrode (E1a) and the second electrode (E2a) take the shape of two sectors of a ring centred on the intersection between the axle of the wheel (MB) and the board (PAa).

7. Timepiece movement according to Claim 1, **characterized in that** the central portion (Bpb) of the common electrode (Emb) takes the shape of a sector of a ring centred on the intersection between the axle of the wheel (MB) and the board (PAb), and **in that** the first electrode (E1b) and the second electrode (E2b) surround the common electrode (Emb).

8. Timepiece movement according to the preceding claim, **characterized in that** the first electrode (E1b) includes a radial branch (L1gb) to which the lateral edge (L1gdb) of the first electrode (E1b) belongs, the second electrode (E2b) includes a second radial branch (L2db) to which the lateral edge (L2dgb) of the second electrode (E2b) belongs, and each of the first electrode (E1b) and of the second electrode (E2b) includes two circumferential branches (L1eb, L2eb) that are positioned on either side of the common electrode (Emb) and linked to the radial branch (L1gb, L2db) to which the circumferential edge (L1eib, L2eib) belongs.

9. Timepiece movement according to one of the preceding claims, **characterized in that** the locating element (OV) is an opening through the plate (PT) of the wheel (MB).

10. Timepiece movement according to one of Claims 1 to 8, **characterized in that** the locating element (OV) is made of a material having a dielectric permittivity that is different from that of the rest of the plate (PT) and from the air.
